# DEMANDE DE BREVET EUROPEEN

(11) **EP 2 437 222 A1**
(43) Date de publication de la demande: **04.04.2012**
(21) Numéro de dépôt: 11183550.0
(22) Date de dépôt: 30.09.2011
(51) Int. Cl.: G07F 17/10, B62H 5/00

(54) **Dispositif de gestion d'un parc de bicyclettes**

(30) Priorité: 30.09.2010 CH 15962010
(71) Demandeur: Commune Municipale de Bienne, 2501 Bienne (CH)
(72) Inventeur: Kuonen, François, 2503 Bienne (CH)
(74) Mandataire: GLN

(57) **Abrégé**

La présente invention concerne un dispositif de gestion d'un parc de bicyclettes (10) en location comprenant
- un ensemble (12) installé sur une bicyclette, comprenant
-un dispositif de verrouillage (16) agencé pour occuper :
- un état verrouillé empêchant, de manière autonome, l'utilisation de la bicyclette,
- un état déverrouillé autorisant l'utilisation de la bicyclette,

- un émetteur-récepteur courte distance relié au dispositif de verrouillage.

Le dispositif de verrouillage étant autonome, il permet une installation très aisée et économique d'un parc de bicyclettes. Seuls des moyens de contrôle informatique et électronique doivent être installés, notamment une borne relais. Ces moyens communiquent sans fil avec l'émetteur-récepteur.

## Description

### Domaine technique

La présente invention se rapporte au domaine de la gestion des moyens de déplacement alternatifs, en particulier à la gestion d'un parc de bicyclettes en libre service.

### Etat de la technique

Les difficultés de circulation dans les villes et la sensibilisation à l'écologie, ont entraîné la mise en place de réseaux de bicyclettes en location libre-service. Ainsi, en fonction de leur besoin, les utilisateurs peuvent les prendre à une station de location, où les bicyclettes sont verrouillées sur un pilier d'arrimage. En s'identifiant sur une borne d'accueil, l'utilisateur déverrouille la bicyclette et peut l'utiliser et la ramener à cette station ou à une autre station.

Les installations actuellement disponibles sur le marché sont relativement lourdes et onéreuses à mettre en place. Il est tout d'abord nécessaire d'installer une borne d'accueil et des piliers munis d'un système de verrouillage et reliés, en général par un système filaire à la borne d'accueil. Certaines communes peuvent être freinées par les investissements à réaliser et hésitent voire renoncent à proposer un tel service.

La présente invention a pour but de proposer un système de gestion d'un parc de bicyclettes de location particulièrement simple à mettre en oeuvre et exempt des inconvénients ci-dessus.

### Divulgation de l'invention

De façon plus précise, l'invention concerne un dispositif de gestion d'un parc de bicyclettes tel que revendiqué à la revendication 1. Les revendications dépendantes proposent d'autres caractéristiques de l'invention.

### Brève description des dessins

D'autres détails de l'invention apparaîtront plus clairement à la lecture de la description qui suit, faite en référence au dessin annexé dans lequel :
- la figure 1 illustre schématiquement un premier mode de réalisation de l'invention,
- les figures 2, 3a et 3b montrent un détail d'une partie du système de gestion selon l'invention, selon deux modes de réalisation,

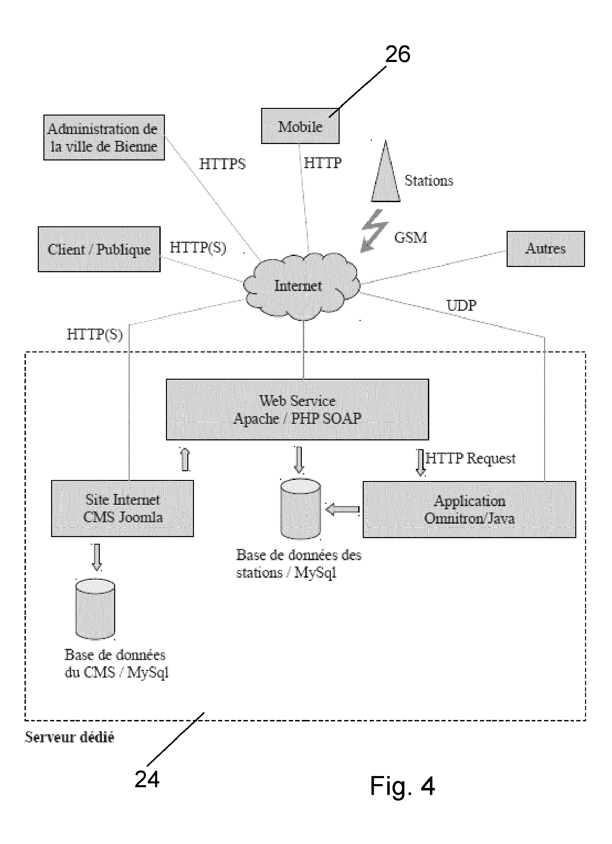

- les figures 4 et 5 proposent deux architectures possibles de réseau pour relier les différents éléments du système de gestion selon l'invention.

### Mode(s) de réalisation de l'invention

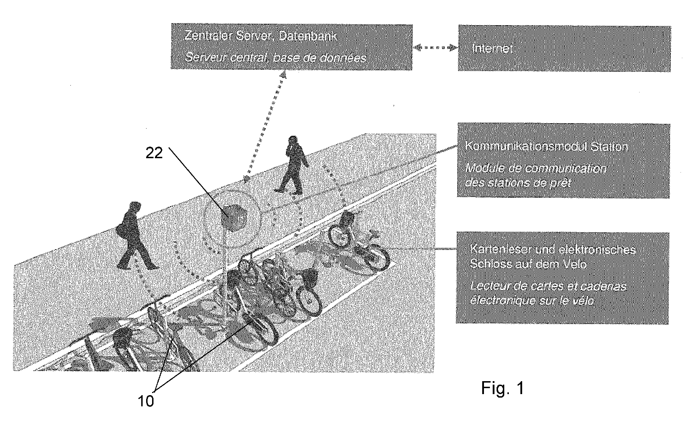

La figure 1 illustre schématiquement un premier mode de réalisation d'un dispositif de gestion d'un parc de bicyclettes 10 en location en libre-service. Ce dispositif comprend, solidaire de chacune des bicyclettes 10 du parc de location, un ensemble 12 comprenant :
- un dispositif de verrouillage 16 susceptible d'empêcher ou non l'utilisation de la bicyclette
- un émetteur-récepteur courte distance relié au lecteur de carte et au dispositif de verrouillage, non visible au dessin.

Le dispositif comprend également une interface pour l'utilisateur, prenant la forme d'un lecteur de carte électronique 14. Dans un mode de réalisation préféré, l'interface, typiquement le lecteur de carte, et le dispositif de verrouillage 16 et l'émetteur-récepteur forment un appareil unique, susceptible d'être fixé au cadre de la bicyclette 10. Le lecteur de carte peut être un lecteur sans contact, permettant de lire les informations contenues dans une puce RFID d'une carte à puce.

On entend par courte distance, un standard de communication permettant d'échanger de manière fiable, des informations sur une distance pouvant aller de l'ordre de 10 mètres, pouvant aller jusqu'à 20 mètres, environ. L'émetteur-récepteur peut notamment être de type wifi, selon les normes IEEE 802.11. On peut également utiliser un système radio à ondes courtes, commercialisé par exemple par Nordic Radio.

Le dispositif de verrouillage 16 est agencé pour occuper :
- un état verrouillé empêchant, de manière autonome, l'utilisation de la bicyclette,
- un état déverrouillé autorisant l'utilisation de la bicyclette.
Selon un aspect important de l'invention, le dispositif de verrouillage 16 est autonome, c'est-à-dire qu'il permet d'empêcher l'utilisation de la bicyclette sans aide d'un dispositif extérieur, tel qu'un poteau scellé dans le sol, comme c'est normalement le cas dans les parcs de bicyclettes en libre-service de l'état de la technique.

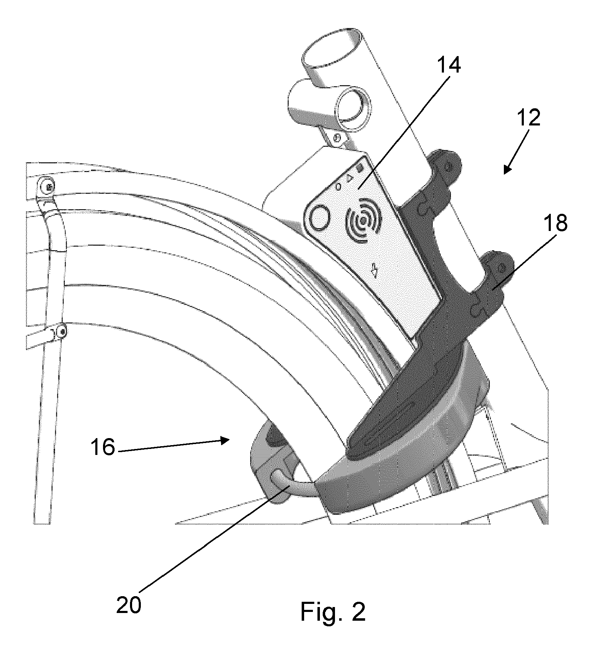

Le dispositif de verrouillage 16 peut être prévu pour bloquer la rotation de la roue arrière. Dans ce but, comme le montre la figure 2, un dispositif de type antivol est fixé sur le vélo au moyen d'un adaptateur 18. Il comporte une partie mobile 20, actionnable par un moteur électrique et susceptible de croiser la trajectoire des rayons de la roue, afin de bloquer la rotation de cette dernière. Le dispositif de verrouillage 16 comprend une alimentation électrique autonome et est commandé par le lecteur de cartes qui joue le roule de dispositif électronique de commande, permettant d'enclencher le moteur électrique pour déplacer la partie mobile 20 et l'amener à bloquer ou non la rotation de la roue. Le dispositif de verrouillage 16 peut également être prévu pour bloquer la rotation du guidon autour de l'axe de direction. Dans cette variante, non représentée, le moteur électrique peut actionner un tigeron de manière à ce que ce dernier rende solidaire un plongeur solidaire du guidon et le tube de direction du cadre. On pourrait également prévoir un dispositif de verrouillage en deux parties, l'une solidaire du guidon et l'autre du cadre, les deux parties étant disposées en regard et à proximité l'une de l'autre. Le tigeron peut alors être déplacé de manière rendre solidaire ou non les deux parties du système de verrouillage. Cette solution a l'avantage d'éviter une adaptation particulière du vélo.

Le dispositif de gestion comprend encore au moins une borne 22 comportant un microcontrôleur et des premiers moyens pour communiquer à courte distance et sans contact avec une pluralité d'émetteurs-récepteurs, chacun faisant partie d'un ensemble tel que décrit ci-dessus. La borne 22 peut notamment recevoir des informations sur l'identité d'un utilisateur, les informations étant portées par une carte à puce et lues par le lecteur de cartes qui les transmet, via l'émetteur-récepteur, à la borne 22. La borne 22 est également agencée de manière à transmettre un signal de déverrouillage à l'ensemble (16) pour que le dispositif de verrouillage passe à son état déverrouillé.

On a ainsi une borne 22 pour une station accueillant une pluralité de bicyclettes. Selon les dimensions de la station, on pourrait éventuellement prévoir une deuxième borne 22, si la portée des moyens de communication courte-distance n'est pas suffisante pour faire communiquer toutes les bicyclettes stationnées sur une station et la borne 22 de la station.

De manière avantageuse, la borne 22 est donc commune à une pluralité de bicyclettes. Le fait que la borne 22 communique sans contact avec l'émetteur-récepteur d'un ensemble permet que chaque bicyclette 10 soit posée sur une structure de rangement de bicyclette de type standard, voire même sur la béquille de la bicyclette. Une structure de rangement de type standard peut être, par exemple, un support en forme de fourche dans lequel on engage la roue avant.

La borne 22 comporte également des seconds moyens pour communiquer à longue distance et sans fil avec un serveur 24, qui comprend des moyens de communication correspondant. Le serveur 24 est équipé pour recevoir et enregistrer des informations sur l'identité d'un utilisateur et les moments de prise et de remise d'une bicyclette 10, ainsi que l'identification de la borne 22 ayant transmis lesdites informations. Le serveur 24 peut être muni de moyens de vérification, qui vérifient si les informations reçues sont concordantes et si l'utilisateur dispose d'une autorisation adéquate. Le cas échéant, le serveur 24 peut alors transmettre un signal de déverrouillage à la borne 22, qui peut à son tour le transmettre à l'ensemble 12 équipant la bicyclette, via les moyens de communication courte distance, pour autoriser au non le passage du dispositif de verrouillage à son état déverrouillé.

En variante, on peut prévoir que c'est la borne 22 qui comprend les moyens de vérification nécessaires à donner l'autorisation à l'utilisateur. La borne 22 reçoit ainsi les informations d'identification de l'utilisateur fournie, dans cet exemple, par le lecteur de carte électronique et vérifie si l'autorisation peut être donnée. Le cas échéant, l'autorisation est transmise à l'ensemble 12, via les moyens de communication courte distance. La borne 22 communique avec le serveur 24 pour que ce dernier enregistre la prise d'une bicyclette par l'utilisateur identifié.

Une autorisation adéquate peut signifier que l'utilisateur dispose d'un compte créditeur lui donnant le droit d'emprunter une bicyclette. En variante, l'utilisateur peut disposer d'un compte lui permettant d'emprunter librement une bicyclette, chaque location étant facturée ultérieurement ou payée préalablement. Divers types d'abonnements, de forfaits ou systèmes de facturations peuvent être prévus. Le serveur 24 reconnaît l'utilisateur grâce à sa carte à puce qui l'identifie. Lorsque l'utilisateur ramène à une station quelconque la bicyclette 10 empruntée, il s'identifie une nouvelle fois au moyen du lecteur 14. Le serveur 24 reçoit alors, via la borne 22, l'information sur le moment de remise de la bicyclette. Il peut ainsi aisément calculer la durée d'emprunt et les frais liés à l'emprunt de l'utilisateur, en fonction de son schéma de facturation. Grâce aux informations reçues, le serveur 24 peut en outre gérer et comptabiliser les positions des bicyclettes en relation avec les bornes du dispositif.

On entend par communication longue distance, une communication pouvant s'effectuer sur plusieurs kilomètres. Typiquement, le mode de communication choisi est du GPRS, mais d'autres standards peuvent aussi être utilisés.

Le dispositif qui vient d'être décrit peut avantageusement être implémenté à faible coût, avec une très légère infrastructure. En effet, il est inutile de disposer des piliers d'accueil équipés d'un système de verrouillage et communiquant par contact avec la bicyclette, ou par fil avec les organes de contrôle du dispositif, comme c'est le cas dans les installations de l'état de la technique. Disposer de bicyclettes équipées d'un ensemble tel que décrit et l'installation d'une borne 22 de communication sont les seuls pré-requis matériels à la mise en oeuvre du dispositif. Ainsi, une fois l'infrastructure informatique en place, il est très aisé d'adapter la taille des stations et le nombre de bicyclettes en circulation.

En variante, il est également possible que l'interface soit un téléphone portable et que l'utilisateur s'identifie par ce biais. Comme précédemment, le dispositif de gestion comprend un ensemble 12 installé sur une bicyclette 10, mais ce dernier ne comprend pas de lecteur de carte, seulement un dispositif de verrouillage 16 et un émetteur-récepteur courte distance. Le dispositif comprend également une borne 22 et un serveur 24 tels que décrit ci-dessus.

Comme expliqué ci-après, le dispositif électronique de commande est joué par l'émetteur-récepteur qui reçoit un signal de commande via la borne. Dans cette variante, lorsqu'un utilisateur veut emprunter une bicyclette, il envoie au serveur 24, par exemple par SMS ou par un appel au moyen d'un code spécifique, une information permettant de l'identifier, et également d'identifier la station (et donc la borne 22 de communication) et, éventuellement, la bicyclette souhaitée. Le serveur 24 peut être muni des moyens de vérification. Ainsi, après vérification, le serveur 24 transmet le signal de déverrouillage via la borne 22 et l'émetteur-récepteur de l'ensemble. La remise de la bicyclette s'effectue de la même manière, le serveur 24 recevant une confirmation de la réception du signal de verrouillage, ceci signifiant que la bicyclette est bien en place à une station.

En utilisant un téléphone portable, on peut encore envisager que l'utilisateur, après s'être identifié auprès du serveur 24 comme mentionné ci-dessus, reçoive par SMS un code transmis par le serveur 24. La borne 22 est agencée de manière à être en possession du code transmis par le serveur 24. Pour ce faire, différentes solutions sont possibles. Par exemple, la borne 22 peut être synchronisée avec le serveur 24 de manière à identifier, parmi une série prédéterminée, le code produit par le serveur 24 à un instant donné. La borne 22 et le serveur 24 peuvent également exécuter un même algorithme, permettant d'aboutir à un même code. La borne 22 peut aussi simplement recevoir le code du serveur 24, simultanément à la transmission de celui-ci à l'utilisateur. On pourra encore utiliser d'autres systèmes d'authentification ou d'autorisation, tels que ceux utilisés, par exemple, dans les applications sécurisées sur Internet, notamment pour des applications bancaires.

Le dispositif de verrouillage 16 peut être muni d'une interface supplémentaire de type clavier, numérique ou alphanumérique, permettant à l'utilisateur d'introduire le code qu'il vient de recevoir par SMS. Lorsque le code est introduit via le dispositif de verrouillage 16, ce dernier communique avec la borne 22 via les moyens de communication courte distance. De manière avantageuse, c'est la borne 22 qui est munie des moyens de vérifications et qui vérifie que le code introduit par l'utilisateur est correct et, le cas échéant, envoi le signal de déverrouillage libérant la bicyclette. Le dispositif électronique de commande est joué par l'émetteur-récepteur qui reçoit un signal de déverrouillage via la borne.

Outre le lecteur de carte et le téléphone portable, d'autres interfaces peuvent être envisagées pour permettre à un utilisateur d'introduire des informations sur son identité. Par exemple, des capteurs biométriques, permettant de reconnaitre une emprunte digitale, peuvent être utilisés pour confirmer que l'utilisateur bénéficie des droits lui permettant d'utiliser une bicyclette donnée.

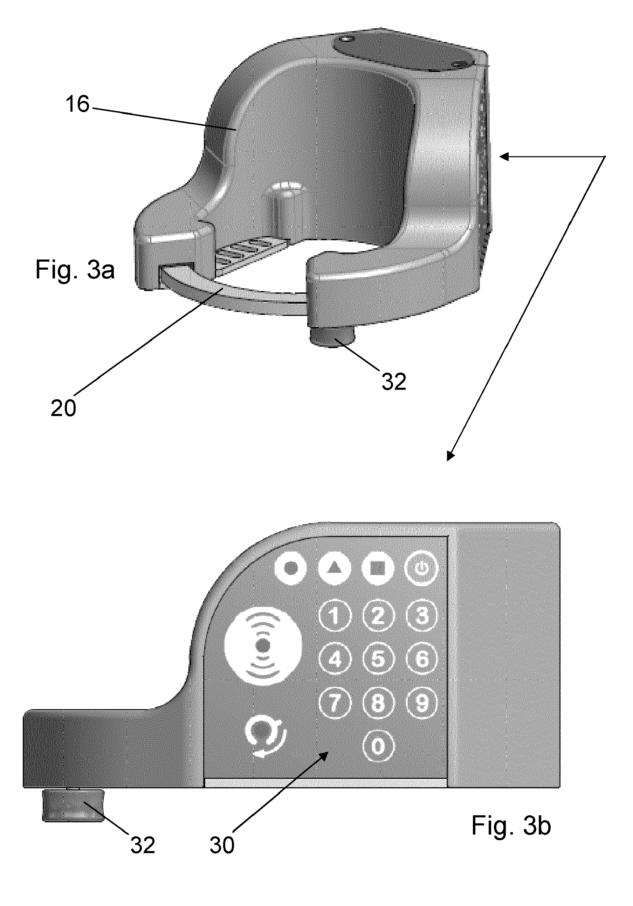

Plusieurs interfaces peuvent coexister pour une même bicyclette. Par exemple, une bicyclette munie d'un lecteur de carte peut être déverrouillée par le téléphone mobile d'un utilisateur. Un tel exemple d'un ensemble 12 est proposé aux figures 3a et 3b. Cet ensemble 12 comporte un dispositif de verrouillage 16 et deux interfaces pour l'utilisateur : un lecteur de carte 14 et un clavier 30. L'utilisateur peut ainsi accéder à une bicyclette soit au moyen de sa carte électronique, via le lecteur de carte 14, soit au moyen d'un code d'identification qu'il aura reçu, par exemple par son téléphone portable.

A l'instar du dispositif de la figure 2, on peut voir sur ce dispositif de verrouillage 16, une partie mobile 20 susceptible de bloquer la rotation de la roue de la bicyclette. Pour le verrouillage, la partie mobile 20 peut être actionnée par une poignée 32. Pour le déverrouillage, on peut envisager que le moteur électrique du dispositif de verrouillage, n'actionne qu'un pêne qui coopère avec la partie mobile 20, celle-ci étant ensuite déplacée par l'action d'un ressort. L'alimentation électrique peut ainsi être économisée et essentiellement dédiée au fonctionnement des moyens de communication. D'autres systèmes de déverrouillage peuvent être utilisés pour l'actionnement du pêne, par exemple de type magnétique. Le dispositif de verrouillage 16 peut être couplé à un adaptateur 18 pour être fixé sur une bicyclette.

Le dispositif de gestion permet encore à l'utilisateur d'avoir accès, après identification, par exemple par login et mot de passe, à des informations sur l'état de son compte et de sa consommation, voire de recharger son crédit en effectuant des paiements. De manière avantageuse, ceci peut se faire par Internet, au travers d'une interface graphique avec laquelle le serveur 24 peut communiquer.

Egalement au travers d'Internet, les gestionnaires du parc de bicyclettes peuvent obtenir toutes les informations et statistiques voulues sur l'utilisation des bicyclettes, ainsi que sur les stations où les bicyclettes inutilisées sont stationnées.

Le serveur 24 stocke la base de données avec toutes les informations liées aux utilisateurs, permettant l'administration du service, notamment les coordonnées, les informations relatives aux abonnements et forfaits souscrits. Ces informations pourraient également être directement stockées au niveau des bornes, afin d'améliorer la rapidité et la réactivité des communications. Les bases de données seraient mises à jour très régulièrement afin d'avoir des informations cohérentes entre les différentes bornes du système.

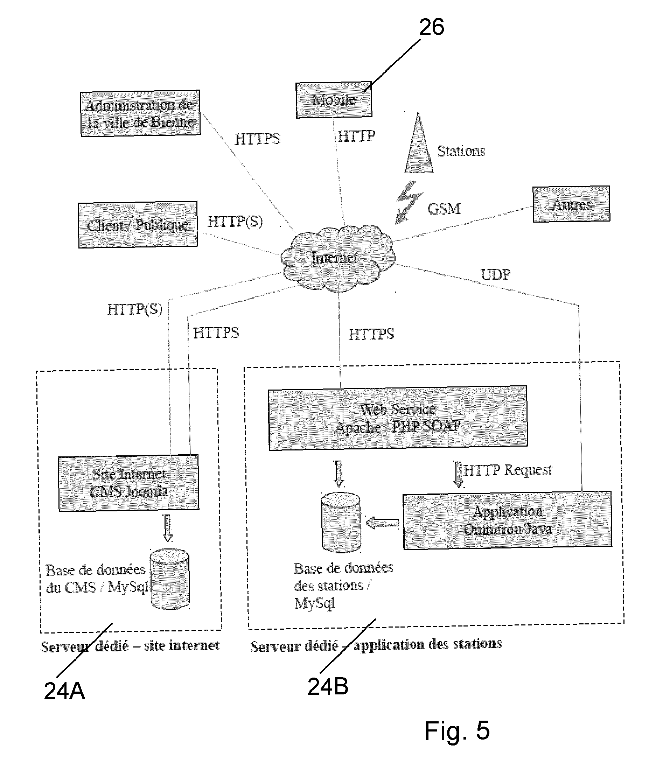

Comme proposé à la figure 5, le système peut comprendre deux serveurs, l'un gérant la partie utilisateur, l'autre gérant l'administration des bicyclettes et des stations.

Ainsi est proposé un dispositif de gestion d'un parc de bicyclettes en libre service particulièrement pratique et peu coûteux à mettre en oeuvre, particulièrement grâce à la légèreté des moyens à mettre en place.

## Revendications

1. Dispositif de gestion d'un parc de bicyclettes (10) en location comprenant :
- une interface (14) pour permettre à un utilisateur d'introduire une information d'identification,
- au moins un ensemble (12) installé sur une bicyclette, comprenant
- un dispositif de verrouillage (16) agencé pour occuper un état verrouillé empêchant, de manière autonome, l'utilisation de la bicyclette, et un état déverrouillé autorisant l'utilisation de la bicyclette,
- un émetteur-récepteur courte distance relié à l'interface et au dispositif de verrouillage,
- au moins une borne (22) comportant un microcontrôleur et des premiers moyens pour communiquer à courte distance et sans contact avec une pluralité d'émetteurs-récepteurs d'une pluralité d'ensembles (12), afin de recevoir notamment des informations sur l'identité d'un utilisateur reçues via l'interface et de transmettre un signal de déverrouillage audit ensemble pour que le dispositif de verrouillage passe à son état déverrouillé, et des seconds moyens pour communiquer à longue distance et sans fil,
- un serveur (24) susceptible de communiquer avec la borne (22) via lesdits seconds moyens, afin de recevoir et d'enregistrer des informations sur l'identité d'un utilisateur et les moments de prise et de remise d'une bicyclette, ainsi que l'identification de la borne (22) ayant transmis lesdites informations, et
- des moyens de vérification agencés pour vérifier les informations sur l'identifié de l'utilisateur et, le cas échéant, autoriser l'envoi dudit signal.

2. Dispositif selon la revendication 1, **caractérisé en ce que** l'interface est un lecteur de carte électronique.

3. Dispositif selon la revendication 2, **caractérisé en ce que** le lecteur de carte électronique est intégré audit ensemble.

4. Dispositif selon l'une des revendications 2 et 3, **caractérisé en ce que** ledit ensemble, la borne (22) et le serveur (24) sont agencés de manière à ce que, lorsqu'un utilisateur dispose une carte pour être lue par le lecteur de carte électronique, ce dernier transmet des informations sur l'identité d'un utilisateur à la borne (22), qui les transmet au serveur (24), ce dernier comporte les moyens de vérification et transmet, le cas échéant, une autorisation d'utilisation à la borne (22) qui transmet ledit signal de déverrouillage.

5. Dispositif selon l'une des revendications 2 et 3, **caractérisé en ce que** ledit ensemble, la borne (22) et le serveur (24) sont agencés de manière à ce que, lorsqu'un utilisateur dispose une carte pour être lue par le lecteur de carte électronique, ce dernier transmet des informations sur l'identité d'un utilisateur à la borne (22) qui comporte les moyens de vérification qui transmet, le cas échéant, ledit signal de déverrouillage.

6. Dispositif selon la revendication 1, **caractérisé en ce que** l'interface est un téléphone portable.

7. Dispositif selon la revendication 6, dans lequel ledit serveur (24) est agencé pour recevoir une information d'identification d'un utilisateur et une information d'identification d'une bicyclette disponible que l'utilisateur souhaite louer, les informations étant transmises via ledit téléphone portable, par un réseau de téléphonie mobile.

8. Dispositif selon la revendication 7, **caractérisé en ce que** ledit serveur (24) est muni desdits moyens de vérification.

9. Dispositif selon la revendication 7, **caractérisé en ce que** ledit serveur est en outre agencé pour transmettre un code à l'utilisateur par ledit réseau de téléphonie mobile et **en ce que** ledit ensemble comporte une interface supplémentaire permettant à l'utilisateur d'introduire ledit code, et **en ce que** ladite borne (22) est agencée de manière à vérifier le code introduit par l'utilisateur et, le cas échéant, à autoriser le passage du dispositif de verrouillage (16) à son état déverrouillé.

10. Dispositif selon l'une des revendications précédentes, **caractérisé en ce que** le serveur (24) est agencé pour calculer la durée d'emprunt et les frais liés à l'emprunt d'un utilisateur.

11. Dispositif selon l'une des revendications précédentes, **caractérisé en ce que** le serveur (24) est agencé pour gérer et comptabiliser les positions des bicyclettes en relation avec les bornes du dispositif.

12. Dispositif selon l'une des revendications précédentes, **caractérisé en ce que** le dispositif de verrouillage (16) est agencé pour bloquer la rotation du guidon autour de l'axe de direction.

13. Dispositif selon l'une des revendications 1 à 11, **caractérisé en ce que** le dispositif de verrouillage (16) est agencé pour bloquer la rotation d'une roue de la bicyclette.

14. Dispositif selon l'une des revendications précédentes, **caractérisé en ce que** le serveur (24) est agencé pour communiquer avec une interface graphique pour afficher les informations qu'il contient.

15. Dispositif selon la revendication 14, **caractérisé en ce que** l'interface graphique permet en outre à un utilisateur de modifier des informations le concernant ou d'effectuer des paiements pour lui donner des crédits d'utilisation dont le montant et la durée correspondante sont mémorisés dans le serveur (24).
